Europäisches Patentamt

**European Patent Office**

Office européen des brevets

(11) Publication number: **0 113 170**
A2

(12) **EUROPEAN PATENT APPLICATION**

(21) Application number: **83306626.9**

(22) Date of filing: **31.10.83**

(51) Int. Cl.³: **G 01 K 17/06**

(30) Priority: **08.11.82 US 439953**

(43) Date of publication of application:
**11.07.84 Bulletin 84/28**

(84) Designated Contracting States:
**DE FR GB IT**

(71) Applicant: THE BABCOCK & WILCOX COMPANY
1010 Common Street P.O. Box 60035
New Orleans Louisiana 70160(US)

(72) Inventor: Dziubakowski, Donald J.
7650 Walnutwood
Seven Hills Ohio 44131(US)

(72) Inventor: Kaya, Azmi
2365 Woodpark Road
Akron Ohio 44313(US)

(72) Inventor: Keyes, Marion A. IV
120 Riverstone Drive
Chagrin Falls Ohio 44022(US)

(74) Representative: Cotter, Ivan John et al,
D. YOUNG & CO. 10 Staple Inn
London WC1V 7RD(GB)

(54) Energy converter performance determination.

(57) A system for determining performance parameters of an energy converter (12) through the use of function blocks is disclosed. The enthalpy ($h_{in}$) and entropy ($S_{in}$) of the supply fluid to the converter (12), the enthalpy of ideal (isentropic) expansion ($\tilde{h}_1$) of the converter, and the enthalpies ($h_1$, $h_2$, $h_3$) of the fluid being extracted from each stage of the converter are determined and are selectively employed as inputs to a plurality of modules. The modules contain function blocks in a logic arrangement and produce a plurality of output signals representative of the operating performance of the energy converter.

./...

FIG.1

1

## ENERGY CONVERTER PERFORMANCE DETERMINATION

This invention relates to systems for determining performance parameters of an energy converter and to systems for determining the entropy and enthalpy of fluids.

Typically, the performance parameters of an energy converter are determined by extensive, laborious calculations. In many instances such calculations require a computer in order to expeditiously accomplish same. Such computers are very costly to acquire and maintain due to the hardware and/or software required and the trained personnel needed to operate same. The use of other devices, such as analog devices, to accomplish these calculations is not practical inasmuch as these devices do not have the accuracy and/or flexibility required and thus degrade the entire performance calculation system.

Because of the foregoing, it has become desirable to develop a system for easily and accurately determining specific performance parameters of an energy converter without the use of a computer or analog devices.

The present invention provides a system for determining the performance parameters of an energy converter having one or more output stages, the system being characterised by means for generating a first signal representative of the enthalpy of the fluid entering the energy converter, means for generating a second signal representative of the enthalpy of the fluid exiting from the or each of the one or more stages of the energy converter, and means for determining one or more performance parameters of the energy converter from the first and second signals.

The present invention also provides a system for measuring the entropy of a fluid, the system being characterised by means for measuring the pressure of the fluid, means for measuring the temperature of the fluid, and means for producing a signal representative of the entropy of the fluid in response to the pressure and temperature measurements.

Further, the present invention provides a system for determining the enthalpy of isentropic expansion of a fluid exiting from an energy converter, the system being characterised by means for determining the entropy of the fluid entering the energy converter, means for measuring the pressure of the fluid exiting from a stage of the energy converter, and means for producing a signal representative of the enthalpy of isentropic expansion of the exiting fluid in response to the entropy determination and the pressure measurement.

A preferred embodiment of the present invention described hereinbelow solves or at least alleviates the aforementioned problems associated with the prior art by utilizing function blocks having fixed functional relations to provide calculating features which are generally only available through computer programming algorithms. The enthalpy and the entropy of supply fluid to a multi-stage energy converter, the enthalpy of ideal (isentropic) expansion of the energy converter and the enthalpies of the fluid being extracted from each stage of the converter are determined by appropriate measuring devices. The foregoing measurements, along with other operating data, are selectively used as inputs to a plurality of modules containing function blocks in a specific logic arrangement. In this manner, the modules, by processing the measurements and data supplied thereto, selectively produce output signals representative of the operating performance of the energy converter being monitored.

The invention will now be further described, by way of illustrative and non-limiting example, with reference to the accompanying drawings, in which:

Fig. 1 is a schematic diagram of logic utilized by a system embodying this invention;

Fig. 2 is a schematic diagram of function blocks which comprise a stage efficiency module of the system of Fig. 1;

Fig. 3 is a schematic diagram of function blocks which comprise a heat rate module of the system of Fig. 1 for actual conditions as shown in Fig. 1;

Fig. 4 is a schematic diagram of function blocks which comprise the heat rate module for ideal conditions as shown in Fig. 1;

Fig. 5 is a schematic diagram of function blocks which comprise an overall efficiency module of the system of Fig. 1;

Fig. 6 is a schematic diagram of function blocks which comprise a cost of generation module of the system of Fig. 1; and

Fig. 7 is a schematic diagram of function blocks which comprise an extraction efficiency module of the system of Fig. 1.

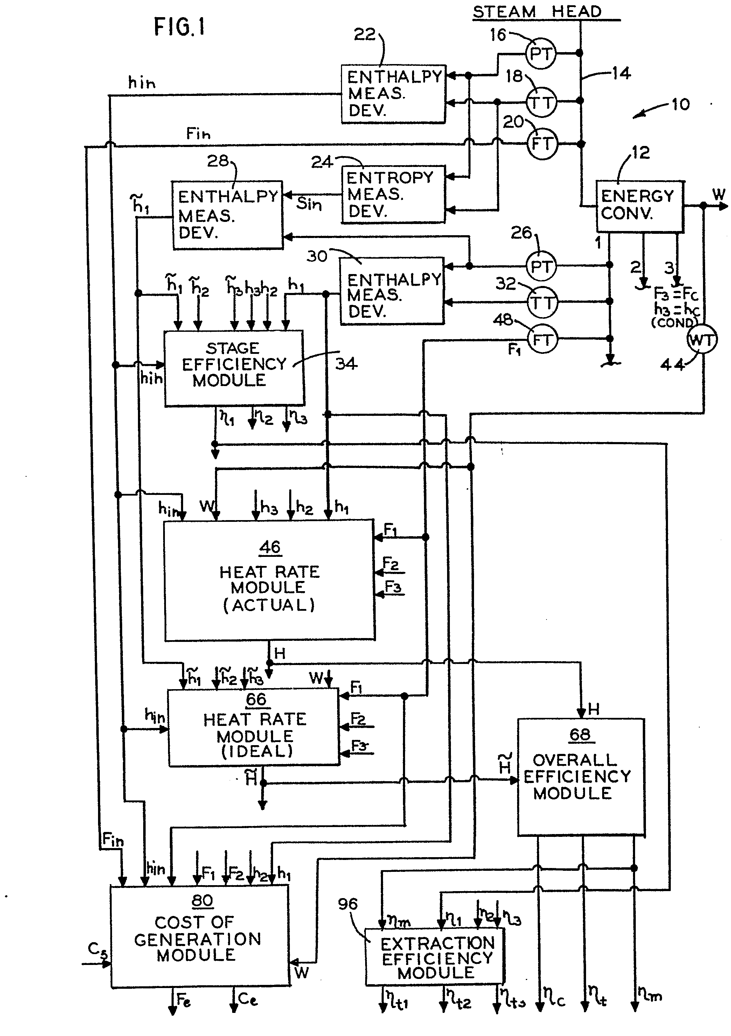

Referring now to the drawings, Fig. 1 is a schematic diagram of a logic 10 making up a system for determining the performance characteristics of an energy converter 12 being monitored. The energy converter 12 may be a turbine, generator, etc., or any other device utilized to convert energy.

Figure 1 shows a conduit 14 through which a fluid, such as water, steam, gas, etc. flows to the input to the energy converter 12. The pressure, temperature and rate of flow of the foregoing fluid are measured by a pressure transmitter 16, a temperature transmitter 18, and a flow transmitter 20, respectively. The outputs of the pressure transmitter 16 and the temperature transmitter 18 are used as inputs to an enthalpy measuring device 22 and to an entropy measuring device 24. The enthalpy measuring device 22 is substantially as disclosed in U.S. Patent No. 4,244,216 and processes the foregoing information as to the pressure and temperature of the fluid within the conduit 14 to produce an output signal representative of the enthalpy $h_{in}$ therein at its output. The entropy measuring device 24 also processes the foregoing information as to pressure and temperature of the fluid flowing to the

input of the energy converter 12 and produces an output signal representative of the entropy $S_{in}$ therein at its output. This entropy ($S_{in}$) output signal, along with the output of a pressure transmitter 26 which measures the pressure of the fluid being extracted from the first stage of the energy converter 12, are used as inputs to another enthalpy measuring device 28. This enthalpy measuring device 28 is also similar to that disclosed in U.S. Patent No. 4,244,216 except that the entropy ($S_{in}$) output signal, rather than temperature, is used as an input thereto. The enthalpy measuring device 28 processes the foregoing entropy measurement and the first stage fluid extraction pressure information to produce a signal representative of ideal (isentropic) expansion $\tilde{h}_1$ at its output. Still another enthalpy measuring device 30 receives information from the pressure transmitter 26 as to the pressure of the fluid being extracted from the first stage of the energy converter 12 and also receives information as to the temperature of same from a temperature transmitter 32. This enthalpy measuring device 30 is also similar to that disclosed in U.S. Patent No. 4,244,216 and processes the foregoing pressure and temperature information to produce an output signal representative of the enthalpy $h_1$ of the fluid being extracted from the first stage of the energy converter 12. Thus, the foregoing logic determines the energy content ($h_{in}$) of the incoming fluid, the energy content ($\tilde{h}_1$) of the fluid leaving the first stage of the energy converter under ideal (isentropic) conditions, and the energy content ($h_1$) of the fluid leaving the first stage of the energy converter under actual conditions.

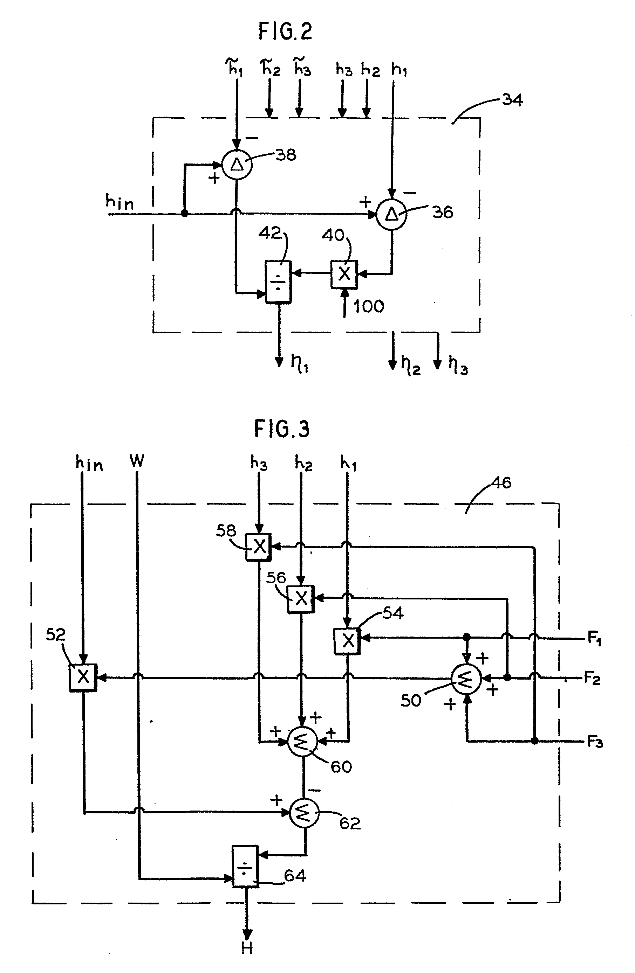

The foregoing parameters indicative of $h_{in}$, $\tilde{h}_1$, and $h_1$ are used as inputs to a stage efficiency module 34 in which the efficiency of each stage of the energy converter 12 can be determined. Other inputs to the module 34 include enthalpies $h_2$ and $h_2$ of the fluid extracted from the second and third stage of the energy converter under actual conditions, and enthalpies $\tilde{h}_2$ and $\tilde{h}_3$ of the foregoing extracted fluid under ideal (isentropic) conditions. The function blocks comprising the stage efficiency model 34 are illustrated in Fig. 2. In this Fig., the input enthalpy $h_{in}$ is used as an input to both subtraction function blocks 36 and 38. The second input to the subtraction function block 36 is the first stage actual enthalpy $h_1$, whereas the second input to the subtraction function block 38 is the first stage enthalpy of ideal (isentropic) expansion $\tilde{h}_1$. Because of the foregoing inputs, subtraction function block 36 produces a signal representative of $h_{in} - h_1$ at its output, and subtraction function block 38 produces a signal representative of $h_{in} - \tilde{h}_1$ at its output. The output signal from the function block 36 is then used as an input to a multiplication function block 40 wherein it is multiplied by the factor 100. The output of the multiplication function block 40, along with the output of the subtraction function block 38, are then used as inputs to a division function block 42 which produces an output signal $n_1$ representative of stage efficiency according to the following equation:

$$\eta_1 = \frac{h_{in} - h_1}{h_{in} - \tilde{h}_1}$$

It should be noted that the efficiency of any stage of the energy converter can be determined in a similar manner.

Referring again to Fig. 1, the power output (w) of the energy converter 12 is measured by a power transmitter 44 whose output is used as an input to a heat rate module 46 for actual conditions. Another input to this module 46 is the flow $F_1$ of the fluid extracted from the first stage of the energy converter 12. This fluid flow $F_1$ is measured by a flow transmitter 48. The flows $F_2$, $F_3$ from the other stages are also measured by similar transmitters, (not shown) and are used as inputs to this module 46. Other inputs to this module 46 include the input enthalpy $h_{in}$, and the enthalpies $h_1$, $h_2$, and $h_3$ of the fluid extracted from each stage of the energy converter under actual conditions. The function blocks comprising the actual heat rate module 46 and the foregoing inputs are illustrated in Fig. 3. In this Fig., the fluid flows $F_1$, $F_2$, and $F_3$ are used as inputs to a summation function block 50 which produces an output signal representative of the total fluid flow extracted from the stages of the energy converter. It should be noted that the fluid flow into the energy converter 12 is also equal to the sum of the flows $F_1$, $F_2$ and $F_3$. The output signal from the summation function block 50 is used as an input to a multiplication function block 52 along with the input enthalpy $h_{in}$. The multiplication function block 52 produces an output signal representative of the flow rate of energy into the energy converter. To determine the flow rate of energy leaving the energy converter, multiplication function blocks 54, 56, and 58 are provided wherein the fluid flows $F_1$, $F_2$, and $F_3$ from each stage of the converter are multiplied by their respective enthalpy contents, i.e., fluid flow $F_1$ is multiplied by its enthalpy content $h_1$ in multiplication function block 54; fluid flow $F_2$ is multiplied by its enthalpy content $h_2$ in multiplication function block 56; and fluid flow $F_3$ is multiplied by its enthalpy content $h_3$ in multiplication function block 58. The output of the function blocks 54, 56, and 58 are used as inputs to a summation function block 60 which produces an output signal representative of the rate of flow of energy leaving the energy converter 12. This signal, along with the output of the multiplication function block 52, are used as inputs to a subtraction function block 62 wherein the output of the summation function block 60 is subtracted from the output of the multiplication function block 52 to produce an output signal representative of the rate of energy used by the energy converter. This output signal and the power output (w) are used as inputs to a division function block 64 wherein the output of the subtraction function block 62 is divided by the power output (w) to produce an output signal H representative of the energy inputted to the converter to generate a unit of energy output.

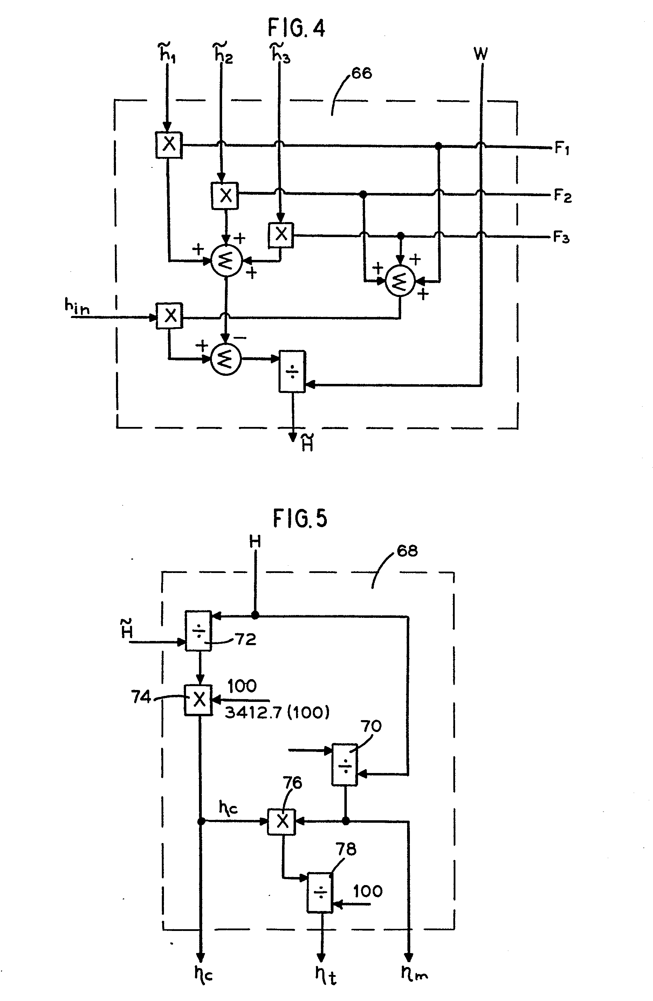

Again referring to Fig. 1, the power output (w) of the energy converter 12, the flows $F_1$, $F_2$, and $F_3$ of the fluids being extracted from the stages of the energy converter, the input enthalpy $h_{in}$, and the enthalpies $\widetilde{h}_1$, $\widetilde{h}_2$, and $\widetilde{h}_3$ of the fluids extracted from each stage of the converter under ideal (isentropic) conditions are inputs to a heat rate module 66 for ideal conditions. The foregoing input signals are applied to the function blocks shown in Fig. 4 which illustrates the blocks which comprise the heat rate module 66 for ideal conditions. The functional logic utilized in Fig. 4 is identical to that utilized in Fig. 3 except that the enthalpies $h_1$, $h_2$, and $h_3$ of the fluid extracted from each stage of the energy converter under actual conditions are replaced by the enthalpies $\widetilde{h}_1$, $\widetilde{h}_2$, and $\widetilde{h}_3$ of the fluid extracted from each stage of the energy converter under ideal (isentropic) conditions. The output signal $\widetilde{H}$ produced by the module 66 is representative of the energy inputted to the converter to generate a unit of energy output under ideal (isentropic) conditions.

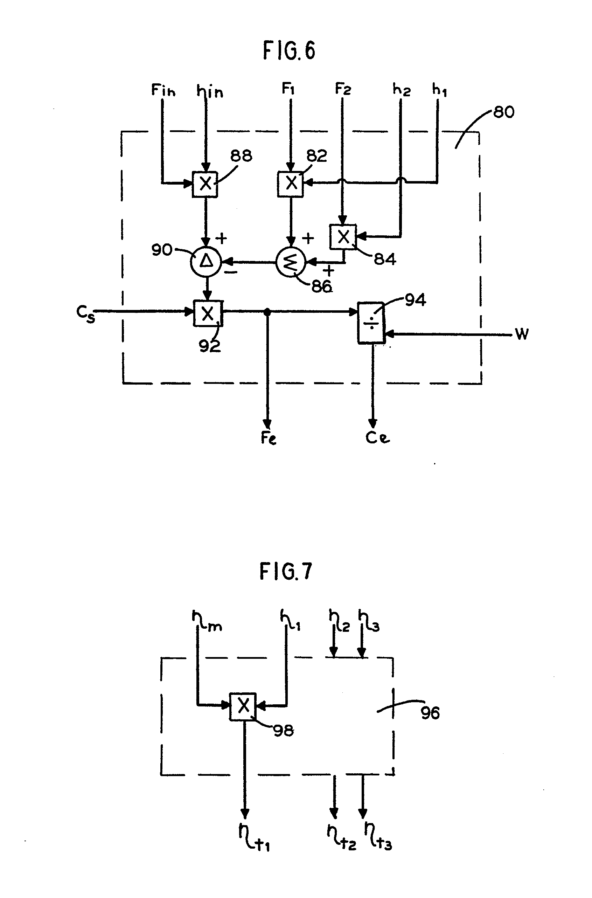

The efficiency of the energy converter 12 is determined by the overall efficiency module 68 illustrated in Fig. 1. In this case the heat rates H and $\tilde{H}$ corresponding to the actual and the ideal (isentropic) conditions, respectively are inputs to this module 68 and are applied to the function blocks, shown in Fig. 5, which comprise this module 68. The other input to this module 68 is a constant equal to 3412.7 (100). In Fig. 5, the actual heat rate H and the constant 3412.7 (100) are used as inputs to a division function block 70 wherein the constant 3412.7 (100) is divided by the heat rate H to produce an output signal representative of the mechanical efficiency $n_m$ of the energy converter. In addition, the actual heat rate H and the ideal heat rate $\tilde{H}$ are used as inputs to a division function block 72 wherein the actual heat rate H is divided by the ideal heat rate $\tilde{H}$ to produce an output signal which is used as an input to a multiplication function block 74 wherein this signal is multiplied by the factor 100 to produce an output signal which is representative of the combined stage efficiency $n_c$ of the energy converter. This output signal $n_c$ along with the output signal $n_m$ are used as inputs to a multiplication function block 76 to produce an output signal which is subsequently divided by the factor 100 in a division function block 78. The function block 78 produces an output signal which is representative of the overall efficiency $n_t$ of the energy converter.

Steam cost can also be determined by the logic illustrated in Fig. 1, and such a determination is accomplished by the cost of generation module 80. This module 80 uses the enthalpies $h_1$ and $h_2$ and the respective

fluid flows $F_1$ and $F_2$ corresponding to the first and second extraction stages (the third extraction stage is excluded because the energy extracted from this stage has no utility value), the input flow $F_{in}$ and the input enthalpy $h_{in}$ to the energy converter, the power output (w) of the energy converter, and the cost $C_s$ of the fluid entering the energy converter as inputs thereto. The foregoing inputs are applied to the function blocks, shown in Fig. 6, which comprise this module 80. In Fig. 6, the enthalpies $h_1$ and $h_2$ and the fluid flow $F_1$ and $F_2$ are inputs to the multiplication function blocks 82 and 84, respectively. Each of these function blocks 82 and 84 produces an output signal which is an input to a summation function block 86 which produces an output signal that is representative of the rate of energy flow leaving the energy converter through the first and second stages thereof. In order to determine the rate of energy flow to the converter, the input enthalpy $h_{in}$ is multiplied by the input flow $F_{in}$ in multiplication function block 88 to produce an output signal which is representative of such energy flow rate. This output signal, along with the output signal from the summation function block 86, are used as inputs to a subtraction function block 90 wherein the output signal from the summation function block 86 is subtracted from the output signal from the multiplication function block 88 to produce an output signal which is subsequently multiplied by the fluid cost $C_s$ in a multiplication function block 92 to produce an output signal representative of the cost flow $F_e$ into the energy converter. This output signal representative of cost flow $F_e$, along with the power output (w), are then used as inputs to a division function block 94 wherein the cost flow $F_e$ is divided by the power output (w) to produce an output signal representative of the cost $C_e$ of the energy output.

Referring again to Fig. 1, the extraction efficiency of each stage of the energy converter is determined by the extraction efficiency module 96. The inputs to this module 96 include the mechanical efficiency $n_m$ of the energy converter and the stage efficiencies $n_1$, $n_2$, and $n_3$. The foregoing inputs are shown in Fig. 7 which illustrates the function block which comprises this module 96. As illustrated in Fig. 7, the mechanical efficiency $n_m$ and the first stage efficiency $n_1$ are used as inputs to a multiplication function block 98 which produces an output signal which is representative of the extraction efficiency $n_{t1}$ of the first stage of the energy converter. The extraction efficiencies $n_{t2}$ and $n_{t3}$ for the second and third stages, respectively can be obtained in a similar manner.

## CLAIMS

1.    A system for determining the performance parameters of an energy converter (12) having one or more output stages, the system (10) being characterised by means (22) for generating a first signal representative of the enthalpy $(h_{in})$ of the fluid entering the energy converter (12), means (30) for generating a second signal representative of the enthalpy $(h_1)$ of the fluid exiting from the or each of the one or more stages of the energy converter (12), and means (46) for determining one or more performance parameters of the energy converter (12) from the first and second signals.

2.    A system according to claim 1, wherein the performance parameter determining means (46) comprises one or more function blocks arranged in a logic configuration.

3.    A system according to claim 1 or claim 2, including means (28) for generating a third signal representative of the enthalpy of isentropic expansion $(\tilde{h}_1)$ of the fluid exiting from the or each of the one or more stages of the energy converter (12).

4.    A system according to claim 3, including means (66) for determining one or more performance parameters of the energy converter (12) from the first and third signals.

5.    A system according to claim 4, wherein the means (66) for determining one or more performance parameters of the energy converter (12) from the first and third signals comprises one or more function blocks arranged in a logic configuration.

6.    A system according to claim 3, including means (34) for determining one or more performance parameters of the energy converter (12) from the first, second and third signals.

7.    A system according to claim 6, wherein the means (34) for determining one or more performance parameters of the energy converter (12) from the first, second and third signals comprises one or more function blocks arranged in a logic configuration.

8. A system according to any one of claims 3 to 7, including means (24) for generating a fourth signal representative of the entropy $(S_{in})$ of the fluid entering the energy converter (12), the fourth signal being utilized by the means (28) for generating the third signal to produce the third signal representative of the enthalpy of isentropic expansion $(\widetilde{h}_1)$ of the fluid exiting from the or each of the energy converter stages.

9. A system for measuring the entropy of a fluid, the system being characterised by means (16) for measuring the pressure of the fluid, means (18) for measuring the temperature of the fluid, and means (24) for producing a signal representative of the entropy of the fluid in response to the pressure and temperature measurements.

10. A system for determining the enthalpy of isentropic expansion of a fluid exiting from an energy converter (12), the system being characterised by means (24) for determining the entropy $(S_{in})$ of the fluid entering the energy converter (12), means (26) for measuring the pressure of the fluid exiting from a stage of the energy converter (12), and means (28) for producing a signal representative of the enthalpy of isentropic expansion $(\widetilde{h}_1)$ of the exiting fluid in response to the entropy determination and the pressure measurement.

FIG.1

1/4

0113170

**FIG.2**

**FIG.3**

3 / 4

FIG. 4

FIG. 5

FIG.6

FIG.7